# FASCICULE DE BREVET EUROPEEN

(11) **EP 1 779 020 B1**
(45) Date de publication et mention de la délivrance du brevet: **27.05.2009**
(21) Numéro de dépôt: 05786113.0
(22) Date de dépôt: 06.07.2005
(51) Int. Cl.: F16L 53/00, B32B 1/08, F16L 11/127

(54) **TUBE DE TRANSPORT DE FLUIDE**
FLÜSSIGKEITSTRANSPORTROHR
FLUID TRANSPORTING TUBE

(30) Priorité: 03.08.2004 FR 0408577
(43) Date de publication de la demande: 02.05.2007
(73) Titulaire: Espa, 75008 Paris (FR)
(72) Inventeur: BERGERE, Stéphane, F-45800 ST JEAN DE BRAYE (FR); KORZHENKO, Alexander, F-27800 SAINT VICTOR D'EPINE (FR); CAUPIN, Henri-Jean, F-78000 VERSAILLES (FR)
(74) Mandataire: Bolinches, Michel Jean-Marie
(86) Numéro de dépôt international: PCT/FR2005/001736
(87) Numéro de publication internationale: WO 2006/024714

(56) Documents cités:
- EP-A- 1 205 514
- WO-A-20/04018924
- DE-B- 1 168 187
- DE-U1- 9 102 352
- US-A1- 2002 139 428
- PATENT ABSTRACTS OF JAPAN vol. 1998, no. 08, 30 juin 1998 (1998-06-30) & JP 10 060959 A (SEKISUI PLASTICS CO LTD), 3 mars 1998 (1998-03-03)

## Description

L'invention concerne un tube de transport de fluide qui est équipé d'un dispositif de régulation thermique de manière à pouvoir mettre notamment hors gel le liquide transporté et faciliter son écoulement dans le tube.

D'une manière générale, la variation de viscosité d'un liquide avec la température est notamment un inconvénient important qui se pose dans l'écoulement de liquides dans les tubes de transport de fluides soumis à des variations de température.

Un but de l'invention est de pallier cet inconvénient.

Un tube de transport selon le preambule de la revendication 1 est connu par le document WO-A-2004/018924.

L'invention propose un tube de transport de fluide comprenant au moins une couche interne, une couche externe de protection, un dispositif intermédiaire de régulation thermique connecté à une source de tension et apte à chauffer le fluide transporté vers une température d'équilibre ou de consigne en utilisant une thermistance à coefficient de température positif dont la résistance est auto-contrôlée par la température et qui est connecté à la source de tension par au moins deux éléments conducteurs qui apportent le courant nécessaire à son échauffement. Chaque élément conducteur est un fil métallique qui est supporté par une nappe textile sous la forme d'une tresse enroulée autour de la couche interne du tube, et en ce que ladite couche interne est à base :
- d'au moins un élastomère, ou
- d'au moins un élastomère thermoplastique choisi dans le groupe constitué par les ionomères et les élastomères thermoplastiques à base oléfinique et à phase élastomère réticulée.

Avantageusement, la thermistance peut être connectée à la source de tension par plusieurs éléments conducteurs qui sont sélectivement reliés à la source de tension pour jouer sur le temps de réponse de la thermistance.

D'une manière générale, la nappe textile peut être texturée et réalisée en un matériau tel du polyamide ou du polyester par exemple, et chaque élément conducteur peut être disposé en spirale, longitudinalement ou transversalement dans la nappe textile.

Selon un mode de réalisation de l'invention, le matériau formant la thermistance peut être enduit sur la nappe textile sous la forme d'une couche de peinture et sur une faible épaisseur inférieure à 1 mm, ce matériau étant un matériau composite polymérique conducteur.

Un tube de transport de fluide selon l'invention peut être utilisé dans de nombreux domaines de l'industrie, en particulier dans le domaine automobile pour injecter un fluide tel l'urée pour agir sur les monoxydes d'azote présents dans les gaz d'échappement d'un véhicule à moteur, dans le domaine aérien pour mettre hors gel un fluide tel l'eau dans la soute d'un avion, ou dans le domaine des piscines pour mettre hors gel l'eau d'une piscine, par exemple.

D'autres avantages, caractéristiques et détails de l'invention ressortiront du complément de description qui va suivre en référence à des dessins annexés, donnés uniquement à titre d'exemple et dans lesquels :
- la figure 1 est une vue avec arrachements partiels d'un fragment de tube de transport de fluide selon l'invention et comprenant un dispositif intermédiaire de régulation thermique ;
- la figure 2 est une vue schématique partielle du dispositif intermédiaire de régulation thermique de la figure 1 ;
- la figure 3 est une vue schématique d'une variante de réalisation du dispositif de régulation thermique de la figure 1 ; et
- la figure 4 est une vue simplifiée d'un mode d'utilisation d'un tube de transport de fluide selon l'invention dans une application de traitement des gaz d'échappement d'un véhicule à moteur.

Selon un mode de réalisation de l'invention, le tube 1 de transport d'un fluide comprend au moins une couche interne 3 qui est en contact ou non avec le fluide transporté et une couche externe 5 de protection. La couche interne 3 est généralement réalisée en un matériau non électriquement conducteur et compatible avec l'agression éventuelle du fluide transporté. La couche externe 5 de protection du tube 1 doit pouvoir résister à l'agressivité éventuelle du milieu environnant et être réalisée dans un matériau présentant de bonnes propriétés d'isolation thermique, ce matériau pouvant être à base d'EPDM par exemple.

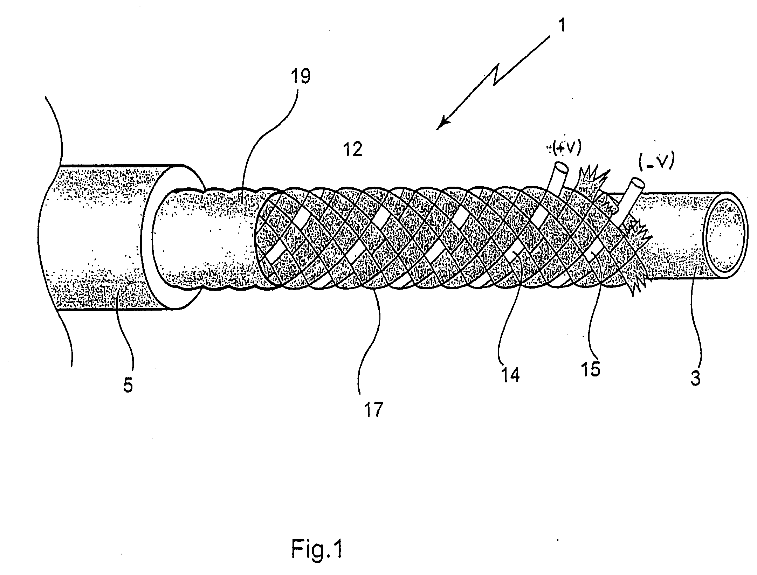

Le tube 1 comprend également un dispositif intermédiaire 10 de régulation thermique qui est connecté à une source de tension non représentée à la figure 1. Ce dispositif 10 de régulation thermique comprend une thermistance 12 à coefficient de température positif dont la résistance électrique est auto-contrôlée par la température (effet PTC). Plus précisément, la thermistance 12 se caractérise par une résistance variable qui augmente notablement à partir d'une température critique ou de seuil. Si on applique une tension aux bornes de la thermistance à une température de l'ordre de 0°C par exemple, le courant qui la traverse va chauffer la thermistance par effet Joule. Lorsque la température atteint une valeur de seuil Tₒ, la résistance de la thermistance va augmenter fortement si bien que toute élévation de la température au-delà de Tₒ va entraîner une diminution du courant traversant la thermistance et donc une diminution de la puissance consommée par effet Joule. Par contre, toute diminution de la température au-dessous de Tₒ va entraîner une augmentation du courant traversant la thermistance et donc une augmentation de la puissance consommée par effet Joule. Autrement dit, on obtient ainsi un auto-contrôle de la puissance dissipée par la thermistance au voisinage de sa température de seuil Tₒ.

La thermistance 12 est connectée à la source de tension par au moins deux éléments conducteurs 14 et 15 qui apportent le courant nécessaire à l'échauffement de la thermistance. Chaque élément conducteur 14 et 15, sous la forme d'un fil métallique par exemple, est supporté par une nappe textile 17 sous la forme d'une tresse avantageusement texturée pour lui donner un certain volume. La nappe textile 17 peut être réalisée en polyamide ou en polyester par exemple, et est enroulée sur la couche interne 3 du tube. Selon l'exemple de réalisation de la figure 1, les éléments conducteurs 14 et 15 sont disposés en spirale dans la nappe textile 17 mais, en variante, ces éléments conducteurs pourraient s'étendre soit longitudinalement suivant une direction parallèle à l'axe du tube, soit transversalement suivant une direction perpendiculaire à l'axe du tube.

La thermistance 12 est constituée en un matériau composite polymérique conducteur, un tel matériau 19 étant notamment décrit dans la demande de brevet européen publiée sous le n° EP-1 205 514. A titre d'exemple, ce matériau 19 peut comprendre en poids de 40 à 90% de PVDF homopolymère ou copolymère cristallisé en forme β, de 10 à 60% d'une charge conductrice, du noir de carbone ou du graphite par exemple, de 0 à 40% d'un polymère cristallin ou semi-cristallin, et de 0 à 40% d'une charge différente de la précédente, les cristaux en forme β précités étant nucléés sur la surface des particules de la charge conductrice. Ce matériau composite polymérique conducteur 19 est enduit sur la nappe textile 17 sous la forme d'une couche de peinture avec une faible épaisseur inférieure à 1 mm et de préférence de l'ordre de quelques dixièmes de millimètre. Cette épaisseur correspond globalement à 100g du matériau enduit sur un mètre carré.

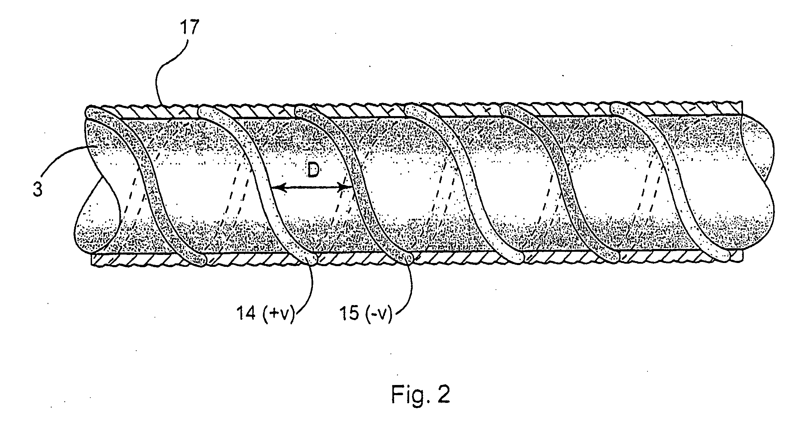

Comme illustré à la figure 2, les deux éléments conducteurs 14 et 15 sont disposés en spirale dans la nappe textile 17 et reliés aux deux bornes d'une source de tension V, et les passages du courant s'effectuent dans le matériau 19 suivant des directions transversales entre les deux éléments conducteurs 14 et 15 séparés l'un de l'autre d'une distance D, en supposant que les deux éléments conducteurs sont enroulés dans la tresse 12 avec un pas constant P (P = D x 2) et espacés l'un de l'autre d'une distance constante.

Ainsi, lorsqu'une tension V est appliquée entre les deux conducteurs 14 et 15, un courant 1 circule dans le matériau 19 et une puissance électrique P va se propager dans ce matériau 19 par effet Joule P = RI² (R étant la résistance électrique du matériau), et se dissiper notamment en direction de la couche interne 3 du tube pour chauffer le fluide transporté par le tube 1. Si le tube 1 se trouve dans un environnement à une basse température T₁ inférieure à 0°C par exemple, la résistance électrique R du matériau 19 va être faible ce qui a pour effet d'augmenter le courant I et donc la puissance P dissipée, avec par conséquence une élévation de la température du fluide transporté pour le mettre hors gel. Lorsque la température du matériau 19 dépasse la valeur de seuil Tₒ à partir de laquelle sa résistance électrique R augmente, le courant I diminue et donc la puissance dissipée, si bien que l'on obtient un auto-contrôle de la puissance dissipée par le matériau 19 autour de la valeur de seuil Tₒ. Si, par contre, le tube 1 se trouve dans un environnement à une température T₂ notablement supérieure à la valeur de seuil Tₒ du matériau 19, la puissance dissipée va être faible et n'aura pas d'incidence sur la valeur de la température T₂. Cependant, dans le cadre de l'invention, c'est la première hypothèse ou mise hors gel qui est privilégiée, à savoir un tube 1 placé dans un environnement à basse température pour augmenter la température du fluide de manière à s'assurer que sa viscosité soit suffisante pour obtenir un bon écoulement du fluide dans le tube 1.

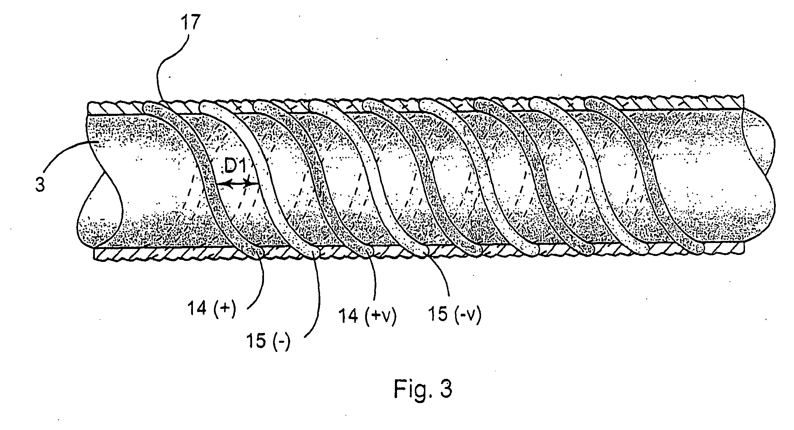

Cependant, comme cela est illustré à la figure 3, on a intérêt à prévoir une pluralité d'éléments conducteurs 14 et d'éléments conducteurs 15 pour diminuer le temps de réponse du matériau 19. En effet, en augmentant le nombre des éléments conducteurs 14 et 15, on diminue la distance D₁ entre deux conducteurs 14 et 15, et il en résulte une plus grande dissipation de chaleur pour chauffer plus rapidement le fluide. Ainsi, on peut prévoir de connecter plus d'éléments conducteurs 14 à la borne + et plus d'éléments conducteurs 15 à la borne - de la source de tension V, en particulier pour augmenter la puissance dissipée par le matériau 19 et atteindre plus rapidement la valeur de sa température de seuil Tₒ.

D'une manière générale, la couche 3 peut être à base :
- d'au moins un élastomère de préférence choisi dans le groupe constitué par les terpolymères éthylène/ propylène/ diène (EPDM), les caoutchoucs silicone, les caoutchoucs fluorosilicone, les caoutchoucs fluorocarbonés, les copolymères éthylène/ acrylate, les polyacrylates, les homopolymères et copolymères d'épichlorhydrine, les caoutchoucs nitrile, les caoutchoucs nitrile hydrogénés, les polychloroprènes, les polyéthylènes chlorosulfonés, les polyuréthannes (PUR) et les mélanges de ces élastomères, ou
- d'au moins un élastomère thermoplastique choisi dans le groupe constitué par les ionomères et les élastomères thermoplastiques à base oléfinique et à phase élastomère réticulée, cet élastomère thermoplastique étant de préférence un mélange :
- d'un élastomère réticulé, qui est synthétisé par un catalyseur métallocène et qui appartient au groupe constitué par les EPDM et les polyoctènes, et
- d'une polyoléfine greffée, telle que le propylène.

A titre encore plus préférentiel, ledit élastomère thermoplastique utilisé dans la couche 3 selon l'invention est un mélange d'un polypropylène greffé et d'un EPDM réticulé et synthétisé par un catalyseur métallocène, cet élastomère thermoplastique répondant avantageusement à la dénomination « VEGAPRENE ».

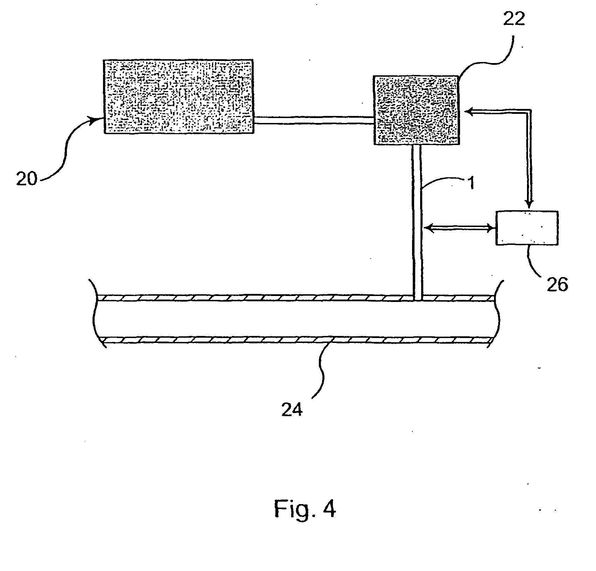

Un tube 1 selon l'invention transportant de l'urée par exemple peut être notamment utilisé pour traiter les oxydes d'azote des gaz d'échappement d'un véhicule à moteur, comme cela est schématiquement illustré à la figure 4. Un réservoir 20 contenant de l'urée est connecté à une pompe à injection 22 qui communique avec la tubulure d'échappement 24 par un tube 1 conforme à l'invention. Au démarrage à froid du moteur, la source de tension qui va alimenter en courant les deux éléments conducteurs 14 et 15 du tube est la batterie 26 du véhicule, et il va en résulter une dissipation de puissance par le matériau 19 qui peut être plus ou moins importante selon la température de l'urée au démarrage du moteur.

Un tube 1 selon l'invention transportant de l'eau par exemple peut être également utilisé pour maintenir hors gel cette eau dans une soute d'avion ou dans une piscine.

Le tube 1 selon l'invention pourrait également avoir une autre structure que celle illustrée à la figure 1, c'est-à-dire comprendre des couches supplémentaires sans pour autant sortir du cadre de l'invention telle que définie par les revendications suivantes, en fonction des applications envisagées.

A titre d'exemple, la couche interne 3 du tube 1 peut avoir une épaisseur comprise entre 1 et 10mm, la couche externe 5 une épaisseur comprise entre 1 et 50mm, et le diamètre intérieur du tube 1 peut être compris entre 5 et 500mm, suivant les applications envisagées.

## Revendications

1. Tube de transport de fluide comprenant au moins une couche interne (3), une couche externe de protection (5), un dispositif intermédiaire (10) de régulation thermique connecté à une source de tension et apte à chauffer le fluide transporté vers une température d'équilibre ou de consigne en utilisant une thermistance (12) à coefficient de température positif dont la résistance électrique est auto-contrôlée par la température et qui est connectée à la source de tension (V) par au moins deux éléments conducteurs (14, 15) qui apportent le courant nécessaire à son échauffement, chaque élément conducteur (14, 15) étant un fil métallique, **caractérisé en ce que** chaque fil métallique est supporté par une nappe textile (17) enroulée autour de la couche interne (3) du tube, et **en ce que** ladite couche interne (3) est à base :
- d'au moins un élastomère, ou
- d'au moins un élastomère thermoplastique choisi dans le groupe constitué par les ionomères et les élastomères thermoplastiques à base oléfinique et à phase élastomère réticulée.

2. Tube de transport de fluide selon la revendication 1, dans lequel la thermistance (12) est connectée à la source de tension (V) par plusieurs éléments conducteurs (14, 15) qui sont sélectivement reliés à la source de tension (V) pour jouer sur le temps de réponse de la thermistance (12).

3. Tube de transport de fluide selon la revendication 1 ou 2, dans lequel la nappe textile (17) est une tresse réalisée en un matériau tel du polyamide ou du polyester par exemple.

4. Tube de transport de fluide selon la revendication 2 ou 3, dans lequel chaque élément conducteur (14, 15) est disposé en spirale dans la nappe textile (17).

5. Tube de transport de fluide selon la revendication 2 ou 3, dans lequel chaque élément conducteur (14, 15) est disposé longitudinalement dans la nappe textile (17).

6. Tube de transport de fluide selon la revendication 2 ou 3, dans lequel chaque élément conducteur (14, 15) est disposé transversalement dans la nappe textile (17).

7. Tube de transport de fluide selon l'une des revendications précédentes, dans lequel le matériau formant la thermistance (12) est déposé sur la nappe textile (17) sous la forme d'une couche de peinture.

8. Tube de transport de fluide selon la revendication 7, dans lequel le matériau (19) formant la thermistance (12) est déposé sur une faible épaisseur inférieure à 1 mm.

9. Tube de transport de fluide selon la revendication 7 ou 8, dans lequel le matériau (19) formant la thermistance (12) est un matériau composite polymérique conducteur.

10. Tube de transport de fluide selon la revendication 1, dans lequel la couche interne (3) est réalisée en un matériau non électriquement conducteur à base dudit élastomère ou dudit élastomère thermoplastique, la couche externe de protection (5) présente de bonnes propriétés d'isolation thermique et est réalisée en un matériau à base d'un terpolymère éthylène/ propylène/ diène par exemple, et le dispositif intermédiaire (10) de régulation thermique est réalisé sous la forme d'un matériau composite polymérique conducteur (19) enduit sur la nappe textile (17) enroulée autour de la couche interne (3) du tube et supportant les au moins deux éléments conducteurs (14, 15) reliés à la source de tension (V) pour apporter le courant nécessaire à l'échauffement du matériau composite (19).

11. Tube de transport de fluide selon la revendication 10, dans lequel ladite couche interne (3) est à base d'au moins un élastomère choisi dans le groupe constitué par les terpolymères éthylène/ propylène/ diène, les caoutchoucs silicone, les caoutchoucs fluorosilicone, les caoutchoucs fluorocarbonés, les copolymères éthylène/ acrylate, les polyacrylates, les homopolymères et copolymères d'épichlorhydrine, les caoutchoucs nitrile, les caoutchoucs nitrile hydrogénés, les polychloroprènes, les polyéthylènes chlorosulfonés, les polyuréthannes et les mélanges de ces élastomères.

12. Tube de transport de fluide selon la revendication 10, dans lequel ladite couche interne (3) est à base d'au moins un élastomère thermoplastique à base oléfinique et à phase élastomère réticulée.

13. Tube de transport de fluide selon la revendication 12, dans lequel ladite couche interne (3) est à base d'au moins un élastomère thermoplastique comprenant un mélange :
- d'un élastomère réticulé, qui est synthétisé par un catalyseur métallocène et qui appartient au groupe constitué par les terpolymère éthylène/ propylène/ diène et les polyoctènes, et
- d'une polyoléfine greffée, telle que le propylène.

14. Utilisation d'un tube de transport de fluide tel que défini par l'une des revendications précédentes, **caractérisée en ce qu'**il est utilisé pour injecter de l'urée dans une tubulure d'échappement de moteur pour agir sur les monoxydes d'azote présents dans les gaz d'échappement.

15. Utilisation d'un tube de transport de fluide tel que défini par l'une des revendications 1 à 13, **caractérisée en ce qu'**il est utilisé pour mettre hors gel un fluide tel que l'eau dans une soute d'avion ou dans une piscine.

## Claims

1. A fluid transport tube comprising at least an inner layer (3), an outer protective layer (5), and an intermediate temperature regulator device (10) connected to a source of voltage and suitable for heating the transported fluid towards an equilibrium or reference temperature by using a positive temperature coefficient thermistor (12) presenting electrical resistance that is automatically controlled by temperature and that is connected to the source of voltage (V) via at least two conductor elements (14, 15) delivering the current needed for heating it, each conductor element (14, 15) being a metal wire, **characterized in that** each metal wire is supported by a textile ply (17) wound around the inner layer (3) of the tube, and **in that** said inner layer (3) is based:
on at least one elastomer; or
on at least one thermoplastic elastomer selected from the group consisting of ionomers and olefin-based thermoplastic elastomers having a cross-linked elastomer phase.

2. A fluid transport tube according to claim 1, in which the thermistor (12) is connected to the source of voltage (V) via a plurality of conductor elements (14, 15) that are selectively connected to the source of voltage (V) in order to act on the response time of the thermistor (12).

3. A fluid transport tube according to claim 1 or claim 2, in which the textile ply (17) is a braid made of a material such as polyamide or polyester, for example.

4. A fluid transport tube according to claim 2 or claim 3, in which each conductor element (14, 15) is disposed in a spiral in the textile ply (17).

5. A fluid transport tube according to claim 2 or claim 3, in which each conductor element (14, 15) is disposed longitudinally in the textile ply (17).

6. A fluid transport tube according to claim 2 or claim 3, in which each conductor element (14, 15) is disposed transversely in the textile ply (17).

7. A fluid transport tube according to any preceding claim, in which the thermistor-forming material (12) is disposed on the textile ply (17) in the form of a layer of paint.

8. A fluid transport tube according to claim 7, in which the material (19) forming the thermistor (12) is deposited with a thickness that is small, less than 1 mm.

9. A fluid transport tube according to claim 7 or claim 8, in which the material (19) forming the thermistor (12) is a conductive polymeric composite material.

10. A fluid transport tube according to claim 1, in which the inner layer (3) is made of a material that is not electrically conductive and that is based on said elastomer or said thermoplastic elastomer, the outer protective layer (5) presents good thermal insulation properties and is made of a material based on an ethylene/propylene/diene terpolymer, for example, and the intermediate temperature regulator device (10) is made in the form of a conductive polymeric composite material (19) coated on a textile ply (17) wound around the inner layer (2) of the tube and supporting at least two conductor elements (14, 15) connected to the source of voltage (V) to provide the current needed for heating the composite material (19).

11. A fluid transport tube according to claim 10, in which said inner layer (3) is based on at least one elastomer selected from the group consisting of: ethylene/propylene/diene terpolymers, silicone rubbers, fluorosilicone rubbers, fluorocarbon rubbers, ethylene/acrylate copolymers, polyacrylates, homopolymers and copolymers of epichlorhydrine, nitrile rubbers, hydrogenated nitrile rubbers, polychloroprenes, chlorosulfonated polyethylenes, polyurethanes, and mixtures of said elastomers.

12. A fluid transport tube according to claim 10, in which said inner layer (3) is based on at least one olefin-based thermoplastic elastomer having a cross-linked elastomer phase.

13. A fluid transport tube according to claim 12, in which said inner layer (3) is based on at least one thermoplastic elastomer comprising a mixture:
a cross-linked elastomer that is synthesized by a metallocene catalyst and that belongs to the group consisting of ethylene/propylene/diene terpolymers and polyoctenes; and
· a grafted polyolefin, such as propylene.

14. The use of a fluid transport tube as defined by any preceding claim, **characterized in that** it is used for injecting urea into an engine exhaust pipe to act on the nitrogen monoxides present in the exhaust gas.

15. The use of a fluid transport tube as defined in any one of claims 1 to 13, **characterized in that** it is used for protecting a fluid such as water from freezing in the hold of an airplane or in a swimming pool.

## Patentansprüche

1. Fluidtransportrohr, umfassend wenigstens eine innere Schicht (3), eine äußere Schutzschicht (5), eine dazwischen liegende Vorrichtung (10) zur Wärmeregelung, die mit einer Spannungsquelle verbunden ist und fähig ist, das transportierte Fluid auf eine Gleichgewichtstemperatur oder eine Solltemperatur zu erwärmen, indem ein Thermistor (12) mit positivem Temperaturkoeffizient verwendet wird, dessen elektrischer Widerstand durch die Temperatur automatisch gesteuert wird und der mit der Spannungsquelle (V) durch wenigstens zwei leitende Elemente (14, 15), die den zu seiner Erwärmung notwendigen Strom liefern, verbunden ist, wobei jedes leitende Element (14, 15) ein Metalldraht ist, **dadurch gekennzeichnet, dass** jeder Metalldraht durch einen Textilmantel (17), der um die innere Schicht (3) des Rohrs gewickelt ist, getragen wird, und **dadurch**, dass die innere Schicht (3) auf der Basis
- wenigstens eines Elastomers oder
- wenigstens eines thermoplastischen Elastomers, ausgewählt aus der Gruppe, bestehend aus den Ionomeren und den thermoplastischen Elastomeren auf Olefinbasis und mit vernetzter Elastomerphase,
ist.

2. Fluidtransportrohr gemäß Anspruch 1, in dem der Thermistor (12) mit der Spannungsquelle (V) durch mehrere leitende Elemente (14, 15) verbunden ist, die selektiv mit der Spannungsquelle (V) verbunden sind, um auf die Reaktionszeit des Thermistors (12) zu reagieren.

3. Fluidtransportrohr gemäß Anspruch 1 oder 2, in dem der Textilmantel (17) eine Umflechtung ist, die aus einem Material wie zum Beispiel Polyamid oder Polyester hergestellt ist.

4. Fluidtransportrohr gemäß Anspruch 2 oder 3, in dem jedes leitende Element (14, 15) als Spirale in dem Textilmantel angeordnet ist.

5. Fluidtransportrohr gemäß Anspruch 2 oder 3, in dem jedes leitende Element (14, 15) longitudinal in dem Textilmantel (17) angeordnet ist.

6. Fluidtransportrohr gemäß Anspruch 2 oder 3, in dem jedes leitende Element (14, 15) querlaufend in dem Textilmantel (17) angeordnet ist.

7. Fluidtransportrohr gemäß einem der vorangehenden Ansprüche, in dem das Material, das den Thermistor (12) bildet, in der Form einer Anstrichmittelschicht abgeschieden ist.

8. Fluidtransportrohr gemäß Anspruch 7, in dem das Material (19), das den Thermistor (12) bildet, mit einer schwachen Dicke von unter 1 mm abgeschieden ist.

9. Fluidtransportrohr gemäß Anspruch 7 oder 8, in dem das Material (19), das den Thermistor (12) bildet, ein leitendes Polymerverbundmaterial ist.

10. Fluidtransportrohr gemäß Anspruch 1, in dem die innere Schicht (3) aus einem elektrisch nichtleitenden Material auf der Basis des Elastomers oder des thermoplastischen Elastomers hergestellt ist, die äußere Schutzschicht (5) gute thermische Isolierungseigenschaften aufweist und aus einem Material zum Beispiel auf der Basis eines Ethylen/Propylen/Dien-Terpolymers hergestellt ist und die dazwischen liegende Vorrichtung (10) zur Wärmeregelung in der Form eines leitenden Polymerverbundmaterials (19) hergestellt ist, das auf dem Textilmantel (17) aufgetragen ist, welcher um die innere Schicht (3) des Rohrs gewickelt ist und die wenigstens zwei leitenden Elemente (14, 15) trägt, die mit der Spannungsquelle (V) verbunden sind, um den Strom zu liefern, der für die Erwärmung des Verbundmaterials (19) notwendig ist.

11. Fluidtransportrohr gemäß Anspruch 10, in dem die innere Schicht (3) auf der Basis wenigstens eines Elastomers ist, das aus der Gruppe, bestehend aus Ethylen/Propylen/Dien-Terpolymeren, Silikonkautschuken, Fluorsilikonkautschuken, Ethylen/Acrylat-Copolymeren, Polyacrylaten, Homopolymeren und Copolymeren von Epichlorhydrin, Nitrilkautschuken, hydrierten Nitrilkautschuken, Polychloroprenen, chlorsulfonierten Polyethylenen, Polyurethanen und den Gemischen dieser Elastomeren, ausgewählt ist.

12. Fluidtransportrohr gemäß Anspruch 10, in dem die innere Schicht (3) auf der Basis wenigstens eines thermoplastischen Elastomers auf Olefinbasis und mit vernetzter Elastomerphase ist.

13. Fluidtransportrohr gemäß Anspruch 12, in dem die innere Schicht (3) auf der Basis wenigstens eines thermoplastischen Elastomers ist, das ein Gemisch aus:
- einem vernetzten Elastomer, das durch einen Metallocenkatalysator synthetisiert wird und das zu der Gruppe gehört, die durch die Ethylen/Propylen/Dien-Terpolymere und die Polyoctene gebildet wird, und
- einem Pfropfpolyolefin wie Propylen umfasst.

14. Verwendung eines Fluidtransportrohrs, wie es in einem der vorangehenden Ansprüche definiert ist, **dadurch gekennzeichnet, dass** es verwendet wird, um Harnstoff in einen Motor-Entlüftungsrohrstutzen zu injizieren, um auf die Stickstoffmonooxide zu wirken, die in den Abgasen vorhanden sind.

15. Verwendung eines Fluidtransportrohrs, wie es in einem der Ansprüche 1 bis 13 definiert ist, **dadurch gekennzeichnet, dass** es verwendet wird, um aus Gel ein Fluid wie zum Beispiel Wasser in einem Flugzeugladeraum oder in einem Schwimmbad zu machen.
